(19) **Europäisches Patentamt / European Patent Office / Office européen des brevets**

(11) **EP 3 936 707 B1**

(12) **FASCICULE DE BREVET EUROPEEN**

(45) Date de publication et mention
de la délivrance du brevet:
**31.07.2024 Bulletin 2024/31**

(21) Numéro de dépôt: **21179931.7**

(22) Date de dépôt: **17.06.2021**

(51) Classification Internationale des Brevets (IPC):
**F01N 9/00** *(2006.01)*    **F02D 41/00** *(2006.01)*
**F02D 41/14** *(2006.01)*    **F02M 26/05** *(2016.01)*
**F02M 26/06** *(2016.01)*    **F01N 3/20** *(2006.01)*

(52) Classification Coopérative des Brevets (CPC):
**F01N 9/00; F01N 3/2066; F02D 41/0065;
F02D 41/0072; F02D 41/1405; F02D 41/1406;
F02M 26/05; F02M 26/06;** F01N 2240/36;
F01N 2900/0404; F01N 2900/0408;
F01N 2900/0416; F02D 41/0007; F02D 2041/1412;
F02D 2041/1417;                    (Cont.)

(54) **SYSTÈME DE CONTRÔLE ET DE COMMANDE D'UN MOTEUR À COMBUSTION INTERNE DE TYPE DIESEL DE VÉHICULE AUTOMOBILE**

STEUER- UND REGELUNGSSYSTEM FÜR EINEN DIESELVERBRENNUNGSMOTOR EINES KRAFTFAHRZEUGS

SYSTEM FOR MONITORING AND CONTROLLING A DIESEL INTERNAL COMBUSTION ENGINE OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.07.2020 FR 2007141**

(43) Date de publication de la demande:
**12.01.2022 Bulletin 2022/02**

(73) Titulaire: **NEW H POWERTRAIN HOLDING, S.L.U.
47008 Valladolid (ES)**

(72) Inventeurs:
• **MADDINA, Suresh Babu
500049 Miyapur, Hyderabad (IN)**
• **STROE, Nicoleta-Alexandra
91510 Lardy (FR)**
• **TALON, Vincent
29230 Saint genis Laval (FR)**

(74) Mandataire: **Renault Group
Renault s.a.s.
1 avenue du Golf
FR TCR AVA 055
78084 Guyancourt Cedex (FR)**

(56) Documents cités:
**EP-A1- 2 397 676     FR-A1- 2 901 840**

(52) Classification Coopérative des Brevets (CPC):
(Cont.)
F02D 2041/1433; Y02A 50/20; Y02T 10/12;
Y02T 10/40

**Description**

L'invention porte sur un système de contrôle et de commande d'un moteur à combustion interne de type Diesel de véhicule automobile équipé d'un double circuit de recirculation des gaz d'échappement comprenant un circuit de recirculation à basse pression et un circuit de recirculation à haute pression chacun muni d'une vanne de recirculation respective.

Les circuits de recirculation des gaz d'échappement, ou circuits EGR permettent de prélever une partie des gaz d'échappement émis par le moteur pour les réinjecter dans le circuit d'admission d'air du moteur. La réintroduction de gaz d'échappement en entrée du moteur modifie la combustion interne du moteur et diminue le taux d'oxydes d'azotes NOx émis dans les gaz d'échappement du moteur.

Pour répondre aux normes d'émission de polluants notamment en termes de rejets de $CO_2$, un contrôle optimisé de la pression de suralimentation et du taux d'EGR est nécessaire. Ce contrôle s'inscrit dans le cadre d'un contrôle multi-variable, soumis à des contraintes. Les forts couplages entre les chaînes de circulation de gaz imposent la nécessité d'un contrôle coordonné, qui peut difficilement être assuré par des méthodes classiques, comme une régulation de type Proportionnel Intégral Dérivé, d'acronyme PID. En outre, le besoin de réduire l'effort de calibration oriente les choix du contrôle vers des stratégies basé sur des modèles, ou "model-based" en langue anglaise.

L'utilisation d'un modèle de Commande Prédictive, ou "Model Prédictive Control" en langue anglaise d'acronyme MPC, est une des méthodes les plus appropriées pour le contrôle multi-variable, qui permet la gestion directe des contraintes. En particulier, la présente invention porte sur le contrôle simultané de la pression de suralimentation et du taux d'EGR pour un moteur Diesel équipé d'une double boucle ou double circuit EGR (un circuit HP et un circuit basse pression BP).

Pour la norme euro7, il faut un contrôleur robuste et facilement déployable sur toutes les architectures de moteurs Diesel, tout en réduisant le plus possible les efforts de mise au point.

Il est connu le document EP2935846, qui porte sur un système de contrôle et de commande d'un moteur à combustion interne de type Diesel de véhicule automobile utilisant un modèle de Commande Prédictive MPC, employé pour le contrôle de l'EGR et la pression dans le collecteur d'admission. Un modèle non linéaire du système à contrôler est d'abord synthétisé, duquel est extraite une famille de modèles linéarisés qui sont ensuite utilisés pour la synthèse des contrôleurs MPC. La méthode assure le suivi des consignes et une commande peu agressive. Cette approche présente le désavantage de ne pas permettre une généralisation aux différents types de moteurs Diesel, car la procédure d'extraction de modèles dépend étroitement du moteur.

Il est également connu le document US20170167347, qui porte sur un système et procédé pour déterminer des valeurs d'actionneur cibles d'un moteur en utilisant une commande prédictive de modèle tout en satisfaisant les objectifs d'émissions et de maniabilité et en maximisant le rendement énergétique. La performance de la méthode de contrôle MPC dépend fortement du modèle de prédiction utilisé. Pour des applications de contrôle et de commande d'un moteur, les non linéarités et la complexité d'un tel système font de la modélisation le problème principal de la stratégie de contrôle et de commande. L'objectif de ce système est d'adresser la modélisation pour des méthodes basées sur des modèles, comme le MPC, et n'adresse que la formulation et la performance MPC. Cette approche présente le désavantage de ne pas permettre une généralisation aux différents types de moteurs Diesel, car la procédure d'extraction de modèles dépend étroitement du moteur.

Il est également connu le document FR2936015 qui utilise une estimation de basée sur des réseaux de neurones des variables d'état d'un moteur à combustion interne, et est uniquement restreint à une estimation de données et non à la commande du moteur. Il est également connu des documents EP2397676 et FR2901840 d'utiliser un réseau de neurones dans le but de contrôler un dispositif de post-traitement des gaz d'échappement d'un moteur.

Un but de l'invention est de pallier les problèmes précédemment cités, et notamment, d'être adaptée à tout type de moteur Diesel et de tenir compte de l'aspect dynamique du moteur.

Aussi, il est proposé, selon un aspect de l'invention, un système de contrôle et de commande d'un moteur à combustion interne de type Diesel de véhicule automobile équipé d'une unité de commande électronique, le moteur comprenant un double circuit de recirculation des gaz d'échappement comprenant un circuit de recirculation à basse pression et un circuit de recirculation à haute pression chacun muni d'une vanne de recirculation respective, une vanne d'échappement, un turbocompresseur comprenant une turbine à buses variables et un compresseur, les références amont et aval étant considérées selon le sens de circulation des gaz. L'unité de commande électronique est configurée pour commander, de manière coordonnée, les positions d'ouverture de la vanne du circuit de recirculation à haute pression, les buses variables de la turbine du turbocompresseur, et de la vanne d'échappement, et comprend :

-    un réseau de neurones récurrents configuré pour modéliser le type du moteur Diesel modélisant de manière non-linéaire ;

-    un linéariseur configuré pour linéariser le modèle du réseau de neurones récurrents au point de fonctionnement courant du moteur et fournir des matrices représentative du modèle linéarisé ;

- un estimateur d'états configuré pour estimer les états cachés du réseau de neurones récurrents, à partir du réseau de neurones récurrents et de mesures de la pression en aval de l'échangeur d'air d'admission, de la fraction de gaz brûlés dans le collecteur d'admission, et de la fraction de gaz brûlés en amont du compresseur du turbocompresseur ; et

- un contrôleur basé sur un modèle de prédiction de l'évolution de l'état du moteur configuré pour estimer les commandes des positions d'ouverture de la vanne du circuit de recirculation à haute pression, des buses variables de la turbine du turbocompresseur, et de la vanne d'échappement qui minimisent une fonction de coût quadratique en erreur de suivi de consigne et variation de commande MPC en respectant des consignes de pression en aval de l'échangeur d'air d'admission, de fraction de gaz brûlés dans le collecteur d'admission, et de fraction de gaz brûlés en amont du compresseur du turbocom presseur.

Un tel système permet d'être adaptable à tout type de moteur Diesel et tient compte de la dynamique du moteur.
Dans un mode de réalisation, l'estimateur d'états est configuré pour utiliser un filtre de Kalman, notamment étendu.
Ainsi, à chaque pas il est possible d'anticiper l'impact des commandes sur l'évolution de la trajectoire, et donc de mieux gérer les contraintes. De plus, une telle approche permet de considérer de multiples actionneurs, avec de forts couplages entre les chaînes contrôlées.
Selon un mode de réalisation, le modèle de prédiction linéaire est un modèle variant dans le temps dit "Linear Time-Varying" en langue anglaise, dans lequel on a :

$$\begin{cases} x_{k+1} = A_k x_k + B_k u_k + v_k \\ y_k = C_k x_k \end{cases}$$

k représentant un pas de temps ;
x représentant un vecteur d'état ;
y représentant un vecteur des sorties ;
v représentant des perturbations sur l'état ; et
A, B et C étant respectivement des matrices d'état, de contrôle, et d'observations.

Ainsi, le problème de contrôle peut être formulé sous la forme standard du MPC.
Dans un mode de réalisation, la fonction coût est la suivante :

$$\min_{\Delta u} \sum_{i=1}^{N} \left( \left( y_{k+i} - y_{k+i}^{sp} \right)^T Q \left( y_{k+i} - y_{k+i}^{sp} \right) + \Delta u_{k+i-1}^T R \Delta u_{k+i-1} \right)$$

dans laquelle

$$\mathrm{x}_{min} \le \mathrm{x}_{k+i} \le \mathrm{x}_{max} \ ;$$

$$\mathrm{u}_{min} \le \mathrm{u}_{k+i-1} \le \mathrm{u}_{max} \ ;$$

N représente un horizon de prédiction en nombre pas de temps ;
$y^{sp}$ représente le vecteur de consigne de composantes lesdites consignes ;
Q et R représentent des matrices de pénalité pour le suivi du vecteur de consigne et pour la variation d'un vecteur de commande de composantes lesdites commandes des positions d'ouverture ; et
$\Delta u_{k+i-1}$ représente l'écart entre les commandes à deux instants consécutifs.

L'utilisation d'une telle fonction de coût répond au problème de suivi de consigne et de lissage de la commande. De plus, elle peut être multicritères pour optimiser le remplissage en air des cylindres et le taux de gaz recirculé, ou être variable en fonction des points de fonctionnement du moteur et des contraintes extérieures (par exemple l'altitude).

Selon un autre aspect de l'invention, il est également proposé un procédé de contrôle et de commande d'un moteur à combustion interne de type Diesel de véhicule automobile dans lequel on commande, de manière coordonnée, les positions d'ouverture d'une vanne d'un circuit de recirculation à haute pression, des buses variables d'une turbine d'un turbocompresseur, et d'une vanne d'échappement, comprenant les étapes consistant à :

- modéliser par un réseau de neurones récurrents le type du moteur Diesel de manière non-linéaire ;
- linéariser le modèle du réseau de neurones au point de fonctionnement courant du moteur et fournir des matrices représentative du modèle linéarisé ;
- estimer les états cachés du réseau de neurones récurrents, à partir du réseau de neurones récurrents et de mesures de la pression en aval de l'échangeur d'air d'admission, de la fraction de gaz brûlés dans le collecteur d'admission, et de la fraction de gaz brûlés en amont du compresseur du turbocompresseur ; et
- estimer les commandes des positions d'ouverture de la vanne du circuit de recirculation à haute pression, des buses variables de la turbine du turbocompresseur, et de la vanne d'échappement, en utilisant un modèle de prédiction de l'évolution de l'état du moteur qui minimisent une fonction de coût quadratique en erreur de suivi de consigne et variation de commande MPC en respectant des consignes de pression en aval de l'échangeur d'air d'admission, de fraction de gaz brûlés dans le collecteur d'admission, et de fraction de gaz brûlés en amont du compresseur du turbocompresseur.

L'invention sera mieux comprise à l'étude de quelques modes de réalisation décrits à titre d'exemples nullement limitatifs et illustrés par les dessins annexés sur lesquels :

[Fig.1] illustre schématiquement un système de contrôle et de commande, selon un aspect de l'invention ;

[Fig.2] illustre schématiquement un procédé, selon un aspect de l'invention ; et

[Fig.3] illustre schématiquement le modèle MPC mis en oeuvre dans le contrôleur de l'UCE, selon un aspect de l'invention.

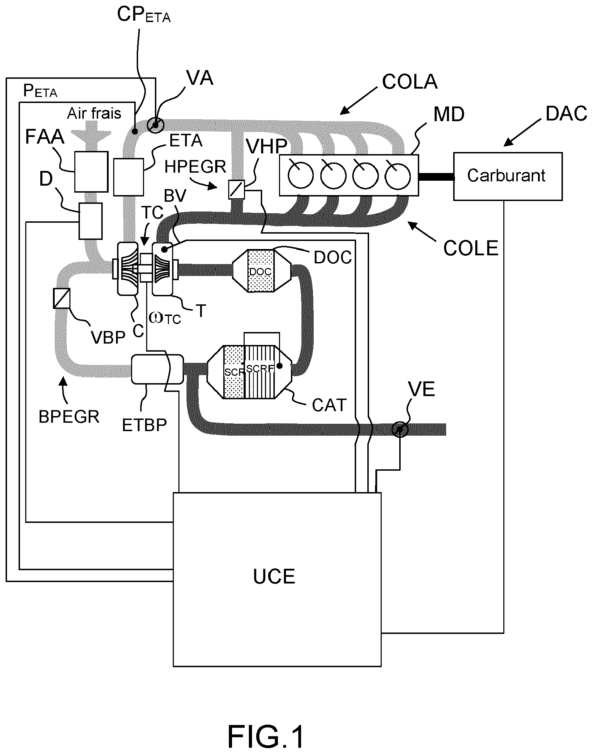

Sur l'ensemble des figures, les éléments ayant des références identiques sont similaires. Tel qu'illustré sur la figure 1, le système comprend un moteur à combustion interne de type diesel MD connecté d'une part à un circuit d'admission destiné à alimenter le moteur en air frais, et d'autre part à un circuit d'échappement destiné à évacuer les gaz d'échappement produits par le moteur MD.
Le circuit d'admission comprend un filtre à air FAA, un débitmètre D permettant de mesurer le débit d'air frais alimentant le circuit d'admission, un compresseur C faisant partie d'un turbocompresseur TC destiné à augmenter la pression de l'air frais d'alimentation, et un échangeur thermique ETA destiné à refroidir l'air en sortie du compresseur C.
Le circuit d'échappement comprend une turbine T à buses variables BV, appartenant au turbocompresseur TC, permettant de moduler le débit de gaz dans la turbine T, entraînée par les gaz d'échappement en sortie du moteur MD, un dispositif catalytique DOC, pour acronyme de "Diesel Oxydation Catalyst" en langue anglaise, permettant de réduire les polluants HC et CO et un dispositif catalytique CAT permettant de réduire les NOx et les particules, comprenant un premier dispositif SCR, pour acronyme de "Sélective Catalyst Réduction" en langue anglaise, qui permet de réduire les polluants Nox et un filtre SCRF qui permet de réduire les NOx et les particules, ainsi qu'une vanne d'échappement VE.
Le moteur MD comprend également un double circuit de recirculation des gaz d'échappement dit EGR comprenant un circuit de recirculation à basse pression BP EGR et un circuit de recirculation à haute pression HPEGR.
Le circuit de recirculation à haute pression HPEGR, reliant l'entrée du collecteur d'admission COLA à la sortie du collecteur d'échappement COLE du moteur MD, comprend une vanne de recirculation VHP.
Le circuit de recirculation à basse pression BPEGR comprend un échangeur thermique ETBP air-air destiné à refroidir les gaz d'échappement recirculés, et une vanne de recirculation VBP disposée en aval de l'échangeur thermique ETBP et en amont du compresseur C.
Une vanne d'admission VA est disposée en aval de l'échangeur thermique ETA et en amont du circuit de recirculation à haute pression HPEGR.
Un capteur $CP_{ETA}$ de mesure de pression, disposé en aval de l'échangeur thermique ETA et en amont de la vanne d'admission VA permet de mesurer la pression $P_{ETA}$ en sortie de l'échangeur thermique ETA.
On estime mesurer la fraction de gaz brûlés au niveau du collecteur d'admission COLA, ainsi que la fraction de gaz brûlés en entrée du compresseur C.
Les vannes sont toutes commandées par l'unité de commande électronique UCE, et y sont donc connectées, et les capteurs de mesures également afin de transmettre les mesures effectuées à l'unité de commande électronique UCE.
Le régime $\omega_{TC}$ ou vitesse de rotation du turbocompresseur TC est également fourni à l'unité de commande électronique UCE, cette grandeur étant soit mesurée soit, préférentiellement, estimée.

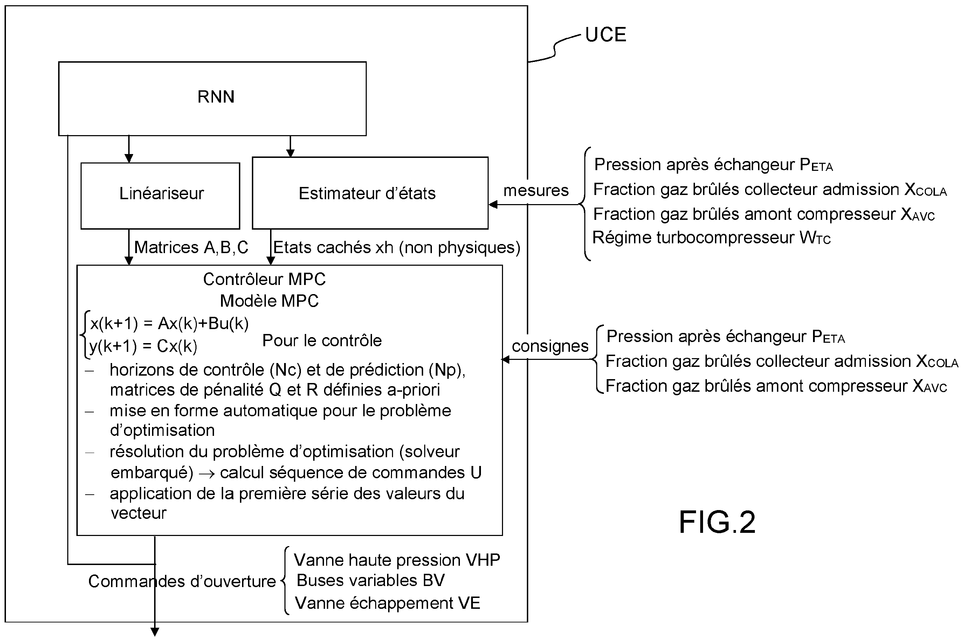

La figure 2 représente schématiquement l'unité de commande électronique UCE et son fonctionnement pour contrôler et commander le moteur à combustion interne MD selon un aspect de l'invention.

L'unité de commande électronique UCE est configurée pour commander, de manière coordonnée, les positions d'ouverture de la vanne VHP du circuit de recirculation à haute pression HP EGR, les buses variables BV de la turbine T du turbocompresseur TC, et de la vanne d'échappement VE.

L'unité de commande électronique UCE comprend :

- un réseau de neurones récurrents RNN configuré pour modéliser le type du moteur Diesel de manière non-linéaire ;

- un linéariseur configuré pour linéariser le modèle du réseau de neurones récurrents RNN au point de fonctionnement courant du moteur et fournir des matrices A, B, C représentatives du modèle linéarisé ;

- un estimateur d'états configuré pour estimer les états cachés du réseau de neurones récurrents, à partir du réseau de neurones récurrents RNN et de mesures de la pression $P_{AVC}$ en aval de l'échangeur d'air d'admission EAA, d'estimations de la fraction $X_{COLA}$ de gaz brûlés dans le collecteur d'admission COLA, et d'estimations de la fraction $X_{AVC}$ de gaz brûlés en amont du compresseur du turbocompresseur TC ; et

- un contrôleur basé sur un modèle de prédiction de l'évolution de l'état du moteur configuré pour estimer les commandes des positions d'ouverture de la vanne VHP du circuit de recirculation à haute pression HPEGR, des buses variables BV de la turbine T du turbocompresseur TC, et de la vanne d'échappement VE qui minimisent une fonction de coût quadratique en erreur de suivi de consigne et variation de commande MPC en respectant des consignes de pression $P_{AVC}$ en aval de l'échangeur d'air d'admission EAA, de fraction $X_{COLA}$ de gaz brûlés dans le collecteur d'admission COLA, et de fraction XAVC de gaz brûlés en amont du compresseur du turbocompresseur TC.

L'estimateur d'états peut être configuré pour utiliser un filtre de Kalman, notamment étendu.

Le système d'air d'un moteur Diesel avec une double boucle EGR présente une pluralité d'actionneurs, tels ceux précédemment décrits. Tous les actionneurs n'ont cependant pas la même dynamique, ce qui permet de partiellement découpler le contrôle et la commande de ces actionneurs sans une dégradation significative de la performance du moteur Diesel MD. Les actionneurs sélectionnés dans la présente invention sont la vanne VHP du circuit de recirculation à haute pression HPEGR, les buses variables BV de la turbine T, et la vanne d'échappement VE.

Ce choix est justifié par une dynamique lente du circuit de recirculation à basse pression BPEGR, qui est de surcroit contrôlé et commandé avec seulement deux positions de la vanne basse pression VBP (ouverte ou fermée, et non des degrés d'ouverture), une dynamique rapide du débit de carburant, ainsi que de la vanne d'admission VA ou papillon.

Les trois actionneurs choisis, VHP, BV, VE nécessitent donc un contrôle-commande coordonné en vue de suivre une consigne de pression de suralimentation et deux consignes de fractions de gaz brûlés : dans le collecteur d'admission COLA et en amont du compresseur C, ce qui est équivalent au ratio EGR.

Des contraintes doivent également être imposées, nécessaires au bon fonctionnement du système, ainsi que pour préserver la signification physique des grandeurs: la vitesse du turbocompresseur doit être limitée à 200 krpm et les fractions de gaz brûlés doivent rester positives. Pour répondre à ces exigences, la présente invention utilise un modèle de commande prédictive MPC dans le contrôleur de l'unité de commande électronique UCE.

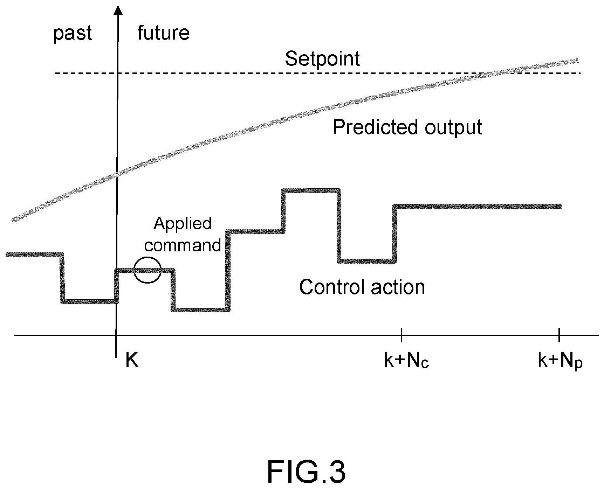

Comme illustré sur la figure 3, MPC est une méthode de contrôle qui s'appuie sur un modèle de prédiction pour évaluer l'évolution d'un système ("Predicted output") pour un horizon Np en pas de temps. Pour cela, il calcule à chaque pas une séquence de commandes futures ("Control action"), de longueur Nc<=Np qui minimisent une fonction de coût soumise à des contraintes sur l'état du système et sur les commandes, le long d'un horizon de prédiction fini Np, dont la valeur dépend du problème (pas de temps et type de performance recherchée). Seulement la première commande U(1) ("applied command") est appliquée au système, combinant ainsi les avantages d'une transmission en avant ou "feedforward" en langue anglaise et d'une rétroaction ou "feedback" en langue anglaise.

Classiquement, la fonction coût à minimiser est sous une forme quadratique avec un modèle de prédiction linéaire ou linéaire variant dans le temps (LTV pour acronyme de "Linear Time-Varying"). La stratégie peut être formalisée de la manière suivante :
Soit le modèle

$$\begin{cases} x_{k+1} = A_k x_k + B_k u_k + v_k \\ y_k = C_k x_k \end{cases}$$

dans lequel x est le vecteur d'état, u le vecteur de commande, y le vecteur des sorties, et v le vecteur des perturbations sur l'état (ou des résidus de linéarisation).

Alors pour un problème classique de suivi de trajectoire, la fonction coût à minimiser s'écrit comme suit :

$$\min_{\Delta u} \sum_{i=1}^{N} \left( \left(y_{k+i} - y_{k+i}^{sp}\right)^{T} Q\left(y_{k+i} - y_{k+i}^{sp}\right) + \Delta u_{k+i-1}{}^{T} R \Delta u_{k+i-1}\right)$$

$$x_{min} \leq x_{k+i} \leq x_{max} \quad ;$$

$$u_{min} \leq u_{k+i-1} \leq u_{max}$$

dans laquelle Np (si Nc<Np, les commandes qui vont du Nc à Np seront constantes et égales à la valeur qui correspond à l'instant Ne) est l'horizon de prédiction, $y^{sp}$ est la consigne, Q et R des matrices de pénalités, respectivement pour le suivi de consigne et pour la variation de la commande. Cette fonction de coût traduit l'objectif de réduire l'écart entre la trajectoire prédite des sorties et leurs consignes, ainsi que l'effort de commande. Les matrices Q et R sont des paramètres à calibrer en fonction des objectifs de contrôle fixés. Cette expression conduit à une formulation classique de programmation quadratique, pour laquelle des solveurs efficaces existent (tels qpOASES, FastMPC) :

$$\min_{U} \frac{1}{2} U^{T} H U + F^{T} U$$

$$\text{s.t. } A_{ineq} U \leq b_{ineq}$$

Le défi principal de cette méthode est l'obtention du modèle de prédiction, de la précision duquel dépend la performance de la stratégie. Le système d'air (l'objectif est de contrôler l'air, l'EGR et la suralimentation d'un moteur diesel) étant fortement non linéaire, la synthèse d'un modèle orienté-contrôle est d'autant plus difficile.

Une possibilité aurait pu consister à extraire des jacobiennes numériques pour certains points, judicieusement choisis pour couvrir la plage de fonctionnement du système. Malgré sa simplicité apparente, cette approche nécessite une bonne connaissance du système contrôlé et des ressources computationnelles importantes, pour le calcul des jacobiennes. De plus, une dégradation de la performance est toujours présente, en raison des interpolations pour les points qui se trouvent entre ceux définis a priori. La discrétisation en zone du domaine de fonctionnement moteur et le passage de zone en zone est aussi délicate lorsque les contrôleurs sont embarqués. Cette possibilité aurait été très complexe à réaliser et très coûteuse en calculs.

Une autre approche aurait pu consister à effectuer à chaque pas d'optimisation des linéarisations à partir des équations physiques pour arriver à un modèle sous la forme présentée précédemment. Une telle méthode est caractérisée pourtant par un haut niveau de complexité et par l'impossibilité de généralisation ; elle nécessiterait d'être adaptée pour chaque nouveau système.

Aussi le système et procédé de l'invention, illustré sur la figure 2, utilise des modèles basés sur un réseau de neurones récurrents RNN. Un réseau de neurones récurrents RNN est un modèle non linéaire entrée-sortie, capable de capturer la dynamique du système à travers les états dits "cachés", ou "hidden states" en langue anglaise.

Par exemple, on peut avoir un réseau Elman :

$$h_t = \sigma_h\left(W_h x_t + U_h h_{t-1} + b_h\right)$$

$$y_t = \sigma_y\left(W_y h_t + b_y\right)$$

ou un réseau Jordan :

$$h_t = \sigma_h\left(W_h x_t + U_h y_{t-1} + b_h\right)$$

$$y_t = \sigma_y(W_y h_t + b_y)$$

dans lesquels

    $x_t$: vecteur d'entrée
    $h_t$: vecteur de la couche cachée
    $y_t$: vecteur de sortie
    *W*, *U* et *b*: matrices et vecteur (paramètres)
    $\sigma_h$ et $\sigma_y$: fonction d'activation

Ce réseau de neurones récurrents RNN permet de modéliser suffisamment précisément et de façon non linéaire la chaine d'air du moteur Diesel en intégrant correctement les phénomènes des lignes ou circuits d'air, y compris les circuits de recirculation à haute pression HPEGR et à basse pression BPEGR, mais aussi le turbocompresseur TC. En basant l'apprentissage de ce RNN sur le modèle système 0D, on capture parfaitement tous les phénomènes, tels les temps de réponse attendus. De plus, au travers de ce modèle de référence, on peut introduire des règles métiers à faire apprendre au réseau de neurones récurrents RNN afin de borner celui-ci et le rendre compatible avec une utilisation dans une unité de commande électronique du moteur. Cette méthode permet d'avoir un apprentissage fiable et explicable du réseau de neurones récurrents RNN.

Dans le cas d'un moteur Diesel avec chaine d'air équipée d'un circuit de recirculation à haute pression HPEGR et d'un circuit de recirculation à basse pression BPEGR ayant des temps de réponse de l'ordre de 500 ms, le réseau de neurones récurrents RNN permet de capturer des dynamiques avec des constantes de temps de 1500 ms (trois fois le temps caractéristique physique du moteur). Ce temps caractéristique est le plus long du moteur et couvre les autres retards qui ont des temps plus courts comme les temps de réponse des actionneurs. Cela est réalisé en ajoutant entre 1 à 2 couches de LSTM pour "Long Terme Short Memory" en langue anglaise, chaque couche LSTM étant composée de 10 à 15 neurones.

Dans le cas d'un moteur Diesel avec une chaine d'air équipée d'actionneurs dont la progressivité n'est pas linéaire (par exemple avec la section de passage d'une vanne EGR qui est non linéaire), le réseau de neurones RNN permet de capturer les non linéarités du système physique avec l'ajout de 2 à 3 couches FC pour "fully connected" en langue anglaise. Ces FC sont elles-mêmes composées de 15 à 20 neurones. Ces FC utilisent notamment comme fonction d'activation la tangente hyperbolique pour ses propriétés de continuité qui est aussi une caractéristique du système physique de ce type de moteur et les FC ont la propriété de bien capturer les non linéarités.

Dans le cas d'un moteur Diesel avec consignes d'EGR et de P$_{COLA}$ venant de la partie définition des consignes de contrôle et de commande du moteur global échantillonnée à 10 ms, le réseau de neurones récurrents RNN est dynamique et pas simplement statique comme les réseaux de neurones classiques de type "Feedforward". Il est exécuté au pas de temps cadencé par l'unité de contrôle électronique UCE et ordonnancé/synchrone avec les consignes d'EGR et de P$_{COLA}$. Le RNN est donc synthétisé pour une exécution par exemple à 10 ms.

Les modèles résultants étant non linéaires, pour leur utilisation dans le cadre du MPC, on effectue des linéarisations autour du point de fonctionnement courant, à chaque pas d'optimisation. L'accès à l'expression analytique des relations qui décrivent la dynamique du système permet de symboliquement définir les matrices A, B et C du modèle linéaire et de les évaluer en temps réel, pour les valeurs courantes des états et des commandes. L'unité de commande électronique UCE embarque le modèle non linéaire, mais à chaque pas de calcul (ie 10 ms) ce modèle estime toutes les variables d'état et par un calcul formel, donc ultra rapide, et donne accès aux matrices A, B et C du modèle linéaire consommable par le MPC.

La procédure de synthèse du réseau de neurones récurrents RNN repose sur les éléments qui suivent.

L'extraction des données entrées-sorties qui caractérisent le système étudié doivent couvrir toute la plage du fonctionnement du système et être suffisamment nombreuses pour une bonne identification. Dans la méthodologie proposée, ces données sont fournies par un modèle physique.

La définition de l'architecture du réseau de neurones, dont les principaux éléments sont les nombres de couches, d'entrées, de sorties et d'états cachés. Le premier est choisi en fonction de la complexité du système (une valeur plus grande peut émuler un degré de complexité plus élevée) et les autres sont directement déduits soit de la définition du système, pour les entrées-sorties, soit des caractéristiques de celui-ci, pour les états cachés. Ces derniers correspondent aux dynamiques représentatives qui sont sélectionnées à partir d'une analyse du modèle physique.

L'entraînement du réseau de neurones, procédure qui détermine les paramètres qui interviennent dans les expressions des couches (cf Wh, Uh et bh). Une méthode de gradient est employée (méthode classique Adam), qui minimise l'erreur entre les valeurs cibles (les données de sorties, extraites du modèle physique) et les valeurs issues du réseau de neurones récurrents RNN. Pour cette procédure d'optimisation, les valeurs classiques du paramétrage sont utilisées, c'est-à-dire les valeurs par défaut qui se retrouvent dans les solveurs.

**EP 3 936 707 B1**

Les entrées du réseau de neurones RNN sont les positions d'ouverture de la vanne VHP du circuit de recirculation à haute pression HPEGR, les buses variables BV de la turbine T du turbocompresseur TC, et de la vanne d'échappement VE.

Les sorties du réseau de neurones RNN sont la pression $P_{AVC}$ en aval de l'échangeur d'air d'admission EAA, la fraction $X_{COLA}$ de gaz brûlés dans le collecteur d'admission COLA, et la fraction $X_{AVC}$ de gaz brûlés en amont du compresseur du turbocompresseur TC, et le régime $\omega_{TC}$ ou vitesse de rotation du turbocompresseur TC.

Après la synthèse du modèle de prédiction, le MPC a besoin des paramètres qui suivent.

Un horizon de prédiction Np ; cette valeur doit être suffisamment élevée pour permettre d'anticiper l'activation des contraintes sur l'état, sans être trop large, ce qui signifierait s'éloigner du point du fonctionnement, autour duquel la linéarisation a été effectuée, limitant donc le domaine de validité du modèle autour de ce point; dans ce cas, Np fixé à 10.

Un horizon de contrôle Nc≤Np ; en vertu de simplicité, on peut choisir Nc=Np, mais une valeur inférieure est possible avec une réduction du temps de calcul.

Des facteurs de pondération Q et R ; en réalité, il suffit de choisir le ratio Q/R; plus on augmente Q, plus on favorise le suivi de trajectoire au détriment d'un effort de commande plus élevé. Par exemple, Q = 100 et R = 1; dans le cas étudié, toutes les grandeurs sont normalisées entre -1 et 1, ce qui permet d'avoir une interprétation correcte du ratio Q/R.

Le réseau de neurones récurrents RNN permet une identification à partir d'un modèle physique et par conséquent il peut couvrir un champ de fonctionnement plus large, notamment sur les bornes du fonctionnement classique du moteur.

Une telle procédure standardisée pour la synthèse du modèle orienté contrôle commande élimine la manipulation des équations physiques qui gouvernent le fonctionnement du système.

La présente invention permet d'éviter l'utilisation d'une famille de modèle définis a priori, et utilise 'un modèle non linéaire (précision plus élevée), qui peut être linéarisé à chaque pas d'optimisation.

**Revendications**

1. Système de contrôle et de commande d'un moteur à combustion interne de type Diesel de véhicule automobile équipé d'une unité de commande électronique (UCE), le moteur comprenant un double circuit de recirculation des gaz d'échappement (EGR) comprenant un circuit de recirculation à basse pression (BPEGR) et un circuit de recirculation à haute pression (HPEGR) chacun muni d'une vanne de recirculation respective (VHP, VBP), une vanne d'échappement (VE), un turbocompresseur (TC) comprenant une turbine (T) à buses variables (BV) et un compresseur (C), les références amont et aval étant considérées selon le sens de circulation des gaz, dans lequel l'unité de commande électronique (UCE) est configurée pour commander, de manière coordonnée, les positions d'ouverture de la vanne (VHP) du circuit de recirculation à haute pression (HPEGR), les buses variables (BV) de la turbine (T) du turbocompresseur (TC), et de la vanne d'échappement (VE), et comprend :

   - un réseau de neurones récurrents (RNN) configuré pour modéliser le type du moteur Diesel modélisant de manière non-linéaire ;

   **caractérisé en ce qu'**il comprend en outre :

   - un linéariseur configuré pour linéariser le modèle du réseau de neurones récurrents (RNN) au point de fonctionnement courant du moteur et fournir des matrices (A, B, C) représentative du modèle linéarisé ;
   - un estimateur d'états configuré pour estimer les états cachés du réseau de neurones récurrents, à partir du réseau de neurones récurrents (RNN) et de mesures de la pression ($P_{AVC}$) en aval de l'échangeur d'air d'admission (EAA), d'estimations de la fraction ($X_{COLA}$) de gaz brûlés dans le collecteur d'admission (COLA), et d'estimations de la fraction ($X_{AVC}$) de gaz brûlés en amont du compresseur du turbocompresseur (TC) ; et
   - un contrôleur basé sur un modèle de commande prédictive MPC de l'évolution de l'état du moteur configuré pour estimer les commandes des positions d'ouverture de la vanne (VHP) du circuit de recirculation à haute pression (HPEGR), des buses variables (BV) de la turbine (T) du turbocompresseur (TC), et de la vanne d'échappement (VE) qui minimisent une fonction de coût quadratique en erreur de suivi de consigne et variation de commande MPC en respectant des consignes de pression ($P_{AVC}$) en aval de l'échangeur d'air d'admission (EAA), de fraction ($X_{COLA}$) de gaz brûlés dans le collecteur d'admission (COLA), et de fraction ($X_{AVC}$) de gaz brûlés en amont du compresseur du turbocompresseur (TC).

2. Système selon la revendication 1, dans lequel l'estimateur d'états est configuré pour utiliser un filtre de Kalman, notamment étendu.

9

3. Système selon l'une des revendications précédentes, dans lequel le modèle de prédiction linéaire est un modèle variant dans le temps dit "Linear Time-Varying", dans lequel on a :

$$\begin{cases} x_{k+1} = A_k x_k + B_k u_k + v_k \\ y_k = C_k x_k \end{cases}$$

k représentant un indice de pas de temps ;
x représentant un vecteur d'état ;
y représentant un vecteur des sorties; u représentant un vecteur de commande;
v représentant des perturbations sur l'état ; et
A, B et C étant respectivement des matrices d'état, de contrôle, et d'observations.

4. Système selon la revendication 3, dans lequel la fonction coût est la suivante :

$$\min_{\Delta u} \sum_{i=1}^{N} \left( \left( y_{k+i} - y_{k+i}^{sp} \right)^T Q \left( y_{k+i} - y_{k+i}^{sp} \right) + \Delta u_{k+i-1}^T R \Delta u_{k+i-1} \right)$$

dans laquelle

$$\mathrm{x_{min}} \leq \mathrm{x_{k+i}} \leq \mathrm{x_{max}} \; ;$$

$$\mathrm{u_{min}} \leq \mathrm{u_{k+i-1}} \leq \mathrm{u_{max}} \; ;$$

N représente un horizon de prédiction, en nombre pas de temps ;
$y^{sp}$ représente le vecteur de consigne de composantes lesdites consignes ; et
Q et R représentent des matrices de pénalité pour le suivi du vecteur de consigne et pour la variation d'un vecteur de commande de composantes lesdites commandes des positions d'ouverture ;
$\Delta u_{k+i-1}$ représente l'écart entre les commandes à deux instants consécutifs.

5. Procédé de contrôle et de commande d'un moteur à combustion interne de type Diesel de véhicule automobile dans lequel on commande, de manière coordonnée, les positions d'ouverture d'une vanne (VHP) d'un circuit de recirculation à haute pression (HPEGR), des buses variables (BV) d'une turbine (T) d'un turbocompresseur (TC), et d'une vanne d'échappement (VE), comprenant les étapes consistant à :

- modéliser par un réseau de neurones récurrents (RNN) le type du moteur Diesel de manière non-linéaire ;
- linéariser le modèle du réseau de neurones (RNN) au point de fonctionnement courant du moteur et fournir des matrices (A, B, C) représentative du modèle linéarisé ;
- estimer les états cachés du réseau de neurones récurrents, à partir du réseau de neurones récurrents (RNN) et de mesures de la pression ($P_{AVC}$) en aval de l'échangeur d'air d'admission (EAA), d'estimations la fraction ($X_{COLA}$) de gaz brûlés dans le collecteur d'admission (COLA), et d'estimations de la fraction ($X_{AVC}$) de gaz brûlés en amont du compresseur du turbocompresseur (TC) ; et
- estimer les commandes des positions d'ouverture de la vanne (VHP) du circuit de recirculation à haute pression (HPEGR), des buses variables de la turbine (T) du turbocompresseur (TC), et de la vanne d'échappement (VE), en utilisant un modèle de commande prédictive MPC de l'évolution de l'état du moteur qui minimisent une fonction de coût quadratique en erreur de suivi de consigne et variation de commande MPC en respectant des consignes de pression ($P_{AVC}$) en aval de l'échangeur d'air d'admission (EAA), de fraction ($X_{COLA}$) de gaz brûlés dans le collecteur d'admission (COLA), et de fraction ($X_{AVC}$) de gaz brûlés en amont du compresseur du turbocompresseur (TC).

**Patentansprüche**

1. Steuer- und Regelungssystem für einen Dieselverbrennungsmotor eines Kraftfahrzeugs, der mit einer elektronischen Steuereinheit (UCE) ausgerüstet ist, wobei der Motor einen doppelten Abgasrückführungskreislauf (EGR), der einen Niederdruckrückführungskreislauf (BPEGR) und einen Hochdruckrückführungskreislauf (HPEGR), die jeweils über ein jeweiliges Rückführungsventil (VHP, VBP) verfügen, beinhaltet, ein Auslassventil (VE), einen Turbolader (TC), der eine Turbine (T) mit verstellbaren Düsen (BV) beinhaltet, und einen Kompressor (C) beinhaltet, wobei sich die Bezeichnungen stromaufwärts und stromabwärts auf die Strömungsrichtung der Gase beziehen, wobei die elektronische Steuereinheit (UCE) dazu konfiguriert ist, die Öffnungspositionen des Ventils (VHP) des Hochdruckrückführungskreislaufs (HPEGR), die verstellbaren Düsen (BV) der Turbine (T) des Turboladers (TC) und des Auslassventils (VE) koordiniert zu regeln, und Folgendes beinhaltet:

- ein rekurrentes neuronales Netz (RNN), das dazu konfiguriert ist, den Typ des Dieselmotors nichtlinear zu modellieren;

**dadurch gekennzeichnet, dass** sie ferner Folgendes beinhaltet:

- einen Linearisierer, der dazu konfiguriert ist, das Modell des rekurrenten neuronalen Netzes (RNN) im aktuellen Betriebspunkt des Motors zu linearisieren und Matrizen (A, B, C) zu liefern, die für das linearisierte Modell repräsentativ sind;
- einen Zustandsschätzer, der dazu konfiguriert ist, die versteckten Zustände des rekurrenten neuronalen Netzes anhand des rekurrenten neuronalen Netzes (RNN) und anhand von Messungen des Drucks ($P_{AVC}$) stromabwärts des Ansaugluftwärmetausches (EAA), von Schätzungen des Anteils ($X_{COLA}$) von Abgasen in dem Ansaugkrümmer (COLA) und von Schätzungen des Anteils ($X_{AVC}$) von Abgasen stromaufwärts des Kompressors des Turboladers (TC) zu schätzen; und
- einen Controller, der auf einer modellprädiktiven Regelung MPC der Entwicklung des Zustands des Motors basiert und dazu konfiguriert ist, die Regelungen für die Öffnungspositionen des Ventils (VHP) des Hochdruckrückführungskreislaufs (HPEGR), der verstellbaren Düsen (BV) der Turbine (T) des Turboladers (TC) und des Auslassventils (VE) zu schätzen, die eine quadratische Kostenfunktion bezogen auf einen Fehler bei der Sollwertnachverfolgung und der MPC-Regelvariation unter Beachtung von Sollwerten des Drucks ($P_{AVC}$) stromabwärts des Ansaugluftwärmetauschers (EAA), des Anteils ($X_{COLA}$) von Abgasen in dem Ansaugkrümmer (COLA) und des Anteils ($X_{AVC}$) von Abgasen stromaufwärts des Kompressors des Turboladers (TC) minimieren.

2. System nach Anspruch 1, wobei der Zustandsschätzer dazu konfiguriert ist, einen Kalman-Filter, insbesondere einen erweiterten Kalman-Filter, zu verwenden.

3. System nach einem der vorhergehenden Ansprüche, wobei das lineare Prognosemodell ein zeitvariantes Modell, auch als "Linear Time-Varying" bezeichnet, ist, bei dem:

$$\begin{cases} x_{k+1} = A_k x_k + B_k u_k + v_k \\ \qquad\quad y_k = C_k x_k \end{cases}$$

wobei k einen Zeitschrittindex darstellt;
wobei x einen Zustandsvektor darstellt;
wobei y einen Vektor der Ausgänge darstellt; u einen Regelungsvektor darstellt;
wobei v Störungen des Zustands darstellt; und
wobei A, B und C jeweils eine Zustands-, Steuer- und Beobachtungsmatrix sind.

4. System nach Anspruch 3, wobei die Kostenfunktion Folgende ist:

$$\min_{\Delta u} \sum_{i=1}^{N} \left( \left( y_{k+i} - y_{k+i}^{sp} \right)^T Q \left( y_{k+i} - y_{k+i}^{sp} \right) + \Delta u_{k+i-1}^{T} R \Delta u_{k+i-1} \right)$$

wobei

$x_{min} \leq x_{k+i} \leq X_{max}$;
$u_{min} \leq u_{k+i-1} \leq u_{max}$;
N einen Prognosehorizont in Anzahl Zeitschritten darstellt;

$y^{sp}$ den Sollwertvektor von Komponenten die Sollwerte darstellt; und

Q und R Strafmatrizen für die Nachverfolgung des Sollwertvektors und für die Variation eines Regelungsvektors von Komponenten die Regelungen der Öffnungspositionen darstellen;

$\Delta u_{k+i-1}$ die Abweichung zwischen den Regelungen zu zwei aufeinanderfolgenden Zeitpunkten darstellt.

5. Steuer- und Regelungsverfahren für einen Dieselverbrennungsmotor eines Kraftfahrzeugs, bei dem die Öffnungspositionen eines Ventils (VHP) eines Hochdruckrückführungskreislaufs (HPEGR), der verstellbaren Düsen (BV) einer Turbine (T) eines Turboladers (TC) und eines Auslassventils (VE) koordiniert geregelt werden, beinhaltend die Schritte, die aus Folgendem bestehen:

- nichtlineares Modellieren, durch ein rekurrentes neuronales Netzwerk (RNN), des Typs des Dieselmotors;
- Linearisieren des Modells des neuronalen Netzes (RNN) im aktuellen Betriebspunkt des Motors und Liefern von Matrizen (A, B, C), die für das linearisierte Modell repräsentativ sind;
- Schätzen der versteckten Zustände des rekurrenten neuronalen Netzes anhand des rekurrenten neuronalen Netzes (RNN) und anhand von Messungen des Drucks ($P_{AVC}$) stromabwärts des Ansaugluftwärmetauschers (EAA), von Schätzungen des Anteils ($X_{COLA}$) von Abgasen in dem Ansaugkrümmer (COLA) und von Schätzungen des Anteils ($X_{AVC}$) von Abgasen stromaufwärts des Kompressors des Turboladers (TC); und
- Schätzen der Regelungen für die Öffnungspositionen des Ventils (VHP) des Hochdruckrückführungskreislaufs (HPEGR), der verstellbaren Düsen (BV) der Turbine (T) des Turboladers (TC) und des Auslassventils (VE) unter Verwendung einer modellprädiktiven Regelung MPC der Entwicklung des Zustands des Motors, die eine quadratische Kostenfunktion bezogen auf einen Fehler bei der Sollwertnachverfolgung und der MPC-Regelvariation unter Beachtung von Sollwerten des Drucks ($P_{AVC}$) stromabwärts des Ansaugluftwärmetauschers (EAA), des Anteils ($X_{COLA}$) von Abgasen in dem Ansaugkrümmer (COLA) und des Anteils ($X_{AVC}$) von Abgasen stromaufwärts des Kompressors des Turboladers (TC) minimieren.

**Claims**

1. System for monitoring and controlling a motor-vehicle diesel internal combustion engine equipped with an electronic control unit (UCE), the engine comprising a double exhaust gas recirculation circuit (EGR) comprising a low-pressure recirculation circuit (BPEGR) and a high-pressure recirculation circuit (HPEGR) each equipped with a respective recirculation valve (VHP, VBP), an exhaust valve (VE), a turbocharger (TC) comprising a variable-nozzle (BV) turbine (T) and a compressor (C), the references upstream and downstream being considered in the direction of gas circulation, wherein the electronic control unit (UCE) is configured to control, in coordinated fashion, the opening positions of the valve (VHP) of the high-pressure recirculation circuit (HPEGR), the variable nozzles (BV) of the turbine (T) of the turbocharger (TC), and of the exhaust valve (VE), and comprises:

- a recurrent neural network (RNN) configured to model the type of the diesel engine, modelling non-linearly;

**characterized in that** it furthermore comprises:

- a linearizer configured to linearize the model of the recurrent neural network (RNN) at the current operating point of the engine and deliver matrices (A, B, C) representative of the linearized model;
- a state estimator configured to estimate the hidden states of the recurrent neural network, based on the recurrent neural network (RNN) and on measurements of the pressure ($P_{AVC}$) downstream of the intake air exchanger (EAA), on estimates of the fraction ($X_{COLA}$) of gases burned in the intake collector (COLA), and on estimates of the fraction ($X_{AVC}$) of gases burned upstream of the compressor of the turbocharger (TC); and
- a controller based on an MPC predictive control model for the evolution of the state of the engine, configured to estimate the commands for the opening positions of the valve (VHP) of the high-pressure recirculation circuit (HPEGR), of the variable nozzles (BV) of the turbine (T) of the turbocharger (TC), and of the exhaust valve (VE) that minimize a mean squared error cost function in terms of setpoint tracking and MPC control variation while complying with setpoints of the pressure ($P_{AVC}$) downstream of the intake air exchanger (EAA), of the fraction ($X_{COLA}$) of gases burned in the intake collector (COLA), and of the fraction ($X_{AVC}$) of gases burned upstream of the compressor of the turbocharger (TC).

2. System according to Claim 1, wherein the state estimator is configured to use a Kalman filter, in particular an extended Kalman filter.

**EP 3 936 707 B1**

3. System according to either of the preceding claims, wherein the linear prediction model is a time-variable model known as a "linear time-varying" model, in which the following applies:

$$\begin{cases} x_{k+1} = A_k x_k + B_k u_k + v_k \\ \quad\quad y_k = C_k x_k \end{cases}$$

k representing a time step index;
x representing a state vector;
y representing an output vector; u representing a control vector;
v representing state interference; and
A, B and C respectively being state, check and observation matrices.

4. System according to Claim 3, wherein the cost function is as follows:

$$\min_{\Delta u} \sum_{i=1}^{N} \left( \left( y_{k+i} - y_{k+i}^{sp} \right)^T \quad Q \left( y_{k+i} - y_{k+i}^{sp} \right) + \Delta u_{k+i-1}^{T} \quad R \Delta u_{k+i-1} \right)$$

wherein

$x_{min} \le x_{k+i} \le X_{max}$;
$u_{min} \le u_{k+i-1} \le u_{max}$;
N represents a prediction horizon, as a number of time steps;
$y^{sp}$ represents the setpoint vector of components said setpoints; and
Q and R represent penalty matrices for the tracking of the setpoint vector and for the variation of a control vector of components said commands for the opening positions;
$\Delta u_{k+i-1}$ represents the deviation between the commands at two consecutive times.

5. Method for monitoring and controlling a motor-vehicle diesel internal combustion engine, comprising controlling, in coordinated fashion, the opening positions of a valve (VHP) of a high-pressure recirculation circuit (HPEGR), the variable nozzles (BV) of a turbine (T) of a turbocharger (TC), and of an exhaust valve (VE), comprising the following steps:

- using a recurrent neural network (RNN) to model the type of the diesel engine non-linearly;
- linearizing the model of the neural network (RNN) at the current operating point of the engine and delivering matrices (A, B, C) representative of the linearized model;
- estimating the hidden states of the recurrent neural network, based on the recurrent neural network (RNN) and on measurements of the pressure ($P_{AVC}$) downstream of the intake air exchanger (EAA), on estimates of the fraction ($X_{COLA}$) of gases burned in the intake collector (COLA), and on estimates of the fraction ($X_{AVC}$) of gases burned upstream of the compressor of the turbocharger (TC); and
- estimating the commands for the opening positions of the valve (VHP) of the high-pressure recirculation circuit (HPEGR), of the variable nozzles of the turbine (T) of the turbocharger (TC), and of the exhaust valve (VE), using an MPC predictive control model for the evolution of the state of the engine, that minimize a mean squared error cost function in terms of setpoint tracking and MPC control variation while complying with setpoints of the pressure ($P_{AVC}$) downstream of the intake air exchanger (EAA), of the fraction ($X_{COLA}$) of gases burned in the intake collector (COLA), and of the fraction ($X_{AVC}$) of gases burned upstream of the compressor of the turbo-charger (TC).

13

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2935846 A
- US 20170167347 A
- FR 2936015
- EP 2397676 A
- FR 2901840